# EUROPÄISCHE PATENTSCHRIFT

(11) **EP 2 567 115 B1**
(45) Veröffentlichungstag und Bekanntmachung des Hinweises auf die Patenterteilung: **07.01.2015**
(21) Anmeldenummer: 11718027.3
(22) Anmeldetag: 02.05.2011
(51) Int. Cl.: F16C 27/04, F16C 19/18

(54) **WÄLZLAGERVORRICHTUNG MIT HYDRAULISCHER DÄMPFUNGSEINRICHTUNG**
ROLLING BEARING DEVICE HAVING A HYDRAULIC DAMPING DEVICE
DISPOSITIF DE PALIER À ROULEMENT COMPORTANT UN DISPOSITIF D'AMORTISSEMENT HYDRAULIQUE

(30) Priorität: 06.05.2010 DE 102010019528
(43) Veröffentlichungstag der Anmeldung: 13.03.2013
(73) Patentinhaber: Schaeffler Technologies GmbH & Co. KG, 91074 Herzogenaurach (DE)
(72) Erfinder: GOLOVATAI-SCHMIDT, Eduard, 91334 Hemhofen (DE); KIRSTEN, Kurt, 91074 Herzogenaurach (DE)
(86) Internationale Anmeldenummer: PCT/EP2011/056894
(87) Internationale Veröffentlichungsnummer: WO 2011/138253

(56) Entgegenhaltungen:
- WO-A1-82/00865
- US-A1- 2007 110 351

## Beschreibung

### Gebiet der Erfindung

Die Erfindung betrifft eine Wälzlagervorrichtung insbesondere in einem Turbolader mit einem Gehäusebauteil mit einer Lagerbohrung mit einem Innenumfang und einem in dieser radial elastisch an einem Außenring mit einem Außenumfang aufgenommenen Wälzlager.

### Hintergrund der Erfindung

Turbolader sind als Abgasturbolader zur Leistungssteigerung von Brennkraftmaschinen durch Erhöhung des Durchsatzes des Brennstoffgemisches in den Brennräumen der Brennkraftmaschinen bekannt. Hierbei wird beispielsweise eine Turbine vom Abgas der Brennkraftmaschine angetrieben, die mit einem Verdichter drehschlüssig verbunden ist, der den Gasdruck des Brennstoffgemisches im Ansaugtrakt der Brennkraftmaschine erhöht. Das Laufzeug des Turboladers - im Wesentlichen Verdichter, Turbine und Rotorwelle - wird häufig gegenüber einem Gehäusebauteil des Turboladers in einer Lagerbohrung gleitgelagert. Aufgrund der Reibung derartiger Gleitlager wird das Ansprechverhalten des Turboladers begrenzt.

Aus der DE 10 2008 020 067 A1 wie auch der WO 82/00865 A1 sind Turbolader mit Wälzlagereinrichtungen bekannt, bei welchen das Laufzeug gegenüber dem Gehäusebauteil mittels eines Wälzlagers verdrehbar aufgenommen ist. Hierdurch können eine wesentliche Reduzierung der Reibung und damit geringere Losbrechkräfte des Laufzeugs und höherer Beschleunigungen erzielt werden. Durch die Unwucht des Laufzeugs treten allerdings hohe Belastungen an dem Wälzlager auf, denen durch Spiel zwischen dem Außenring des Wälzlagers und der Lagerbohrung entgegengewirkt wird, wobei in das Spiel Hydraulikfluid eingepresst wird, um einen Schmierfilm zu erzeugen.

### Aufgabe der Erfindung

Aufgabe der Erfindung ist die vorteilhafte Weiterbildung von Wälzlagervorrichtungen und Turboladern mit diesen hinsichtlich einer verbesserten Dämpfung von Unwuchten der gegenüber einem Gehäuseteil rotierenden Massen wie Laufzeugen von Turboladern. Im Wesentlichen soll dabei der Aufbau und das Design einer Wälzlagervorrichtung beziehungsweise eines Turboladers mit dieser beibehalten werden.

### Beschreibung der Erfindung

Die Aufgabe wird durch eine Wälzlagervorrichtung insbesondere in einem Turbolader mit einem Gehäusebauteil mit einer Lagerbohrung mit einem Innenumfang und einem in dieser an einem Außenring mit einem Außenumfang aufgenommenen Wälzlager gelöst, wobei bei radial elastischer Verspannung des Außenrings in der Lagerbohrung an einem Ringspalt zwischen dem Außenumfang des Außenrings und dem Innenumfang der Lagerbohrung eine hydraulische Dämpfungseinrichtung aus über den Umfang abwechselnd dem Außenumfang und dem Innenumfang zugewandten, zumindest teilweise mit einem Hydraulikfluid befüllten Sicken gebildet ist.

Durch die Aufteilung des Ringspalts in mehrere, über den Umfang verteilte Sicken wird der Einfluss der Viskosität des in diesen enthaltenen Hydraulikfluids vergrößert, so dass eine unter radialer Vorspannung erfolgende Verlagerung des Außenrings gegenüber der Lagerbohrung hydraulisch gedämpft wird. Hierbei kann durch die Auswahl der Querschnitte der Sicken und der Vorspannkraft ein weiter Dämpfungsbereich anwendungsoptimiert eingestellt werden.

Es hat sich dabei als besonders vorteilhaft erwiesen, wenn zur Einstellung der Querschnitte der Sicken und der radialen Vorspannkraft ein einziges Bauteil in Form einer in dem Ringspalt elastisch verspannten Wellhülse vorgesehen ist. Durch Auswahl der Anzahl und Form der über den Umfang verteilten Wellen der Wellhülse, deren Materialdicke und dergleichen lassen sich bei vorgegebenem Ringspalt die Eigenschaften der Dämpfungseinrichtung bezüglich ihrer radialen Steifigkeit und ihrer Dämpfung über einen weiten Bereich einstellen. Gegebenenfalls kann zusätzlich der Ringspalt erweitert oder verengt werden.

Die Versorgung mit Hydraulikfluid erfolgt über zumindest eine an dem Innenumfang der Lagerbohrung vorgesehene Öffnung. Beispielsweise kann eine in etwa mittige Bohrung vorgesehen sein. Alternativ oder zusätzlich können weitere Öffnungen in den stirnseitigen Endbereichen der Wellhülse vorgesehen sein. Es ist in vorteilhafter Weise vorgesehen, das Hydraulikfluid beispielsweise mittels einer hydraulischen Pumpe zu verdichten und durch die zumindest eine Öffnung zu pressen. Der so eingestellte Vordruck kann mittels eines Rückschlagventils stabilisiert werden, so dass bei einer Druckbeanspruchung der Sicken ein Rückfluss bei gegebenenfalls kleinen Drucken ausgeschlossen ist. Alternativ kann ein ausreichend großer Gegendruck vorgehalten werden.

Die Sicken werden über die Druckzufuhr des Hydraulikfluids zumindest teilweise befüllt und durchströmt, wobei durch den Querschnitt der Sicken und deren Länge bei gegebener Viskosität des Hydraulikfluids ein hydrodynamischer Widerstand erzeugt wird, der die durch elastische Verspannung der Wellhülse bewirkten radialen Bewegungen der Außenhülse bei Unwucht des Laufzeugs dämpft. Hierbei weisen die Sicken jeweils eine Verbindung zu der zumindest einen Öffnung in dem Innenumfang der Lagerbohrung und einen stirnseitigen Ablauf und/oder eine Verbindung zu zumindest einer Öffnung in dem Außenring auf, durch den die Wälzkörper des Wälzlagers mit Hydraulikfluid wie beispielsweise Öl geschmiert werden.

Die Zugangsöffnungen von der Lagerbohrung zu den Sicken, die Auslassöffnungen von Sicken zu Innenraum des Wälzlagers und/oder die Stirnseiten der Sicken können durchflussbegrenzt beispielsweise als Blenden oder Spalte ausgebildet sein, so dass der Dämpfungseffekt, das heißt der Abbau von Druck in den Sicken bei einer Kompression der Sicken durch elastische Verspannung der Wellhülse zeitlich verzögert abläuft. Hierzu kann zumindest eine Öffnung an den dem Außenumfang zugewandten Sicken gegenüber dem Innenumfang der Lagerbohrung vorgesehen sein. Weiterhin kann an zumindest einer Sicke an zumindest einer axialen Stirnseite mittels eines in die Wellhülse eingeformten Höckers ein Spalt vorgesehen sein, der einen engen Strömungsquerschnitt ausbildet und die Sicke zumindest teilweise verschließt. Zur Führung des Hydraulikfluids beispielsweise von einer Öffnung in der Lagerbohrung bis zu einer Öffnung wie Durchstich in dem Außenring kann der Außenumfang des Außenrings über entsprechende Profilierungen verfügen.

Je nach der zu erwartenden Unwucht des Laufzeugs mit den dabei auftretenden Radialkräften wird die radiale Steifigkeit der Sicken beziehungsweise Sickenwände ausgebildet und der Dämpfungseffekt der Dämpfungseinrichtung durch die Abstimmung des hydrodynamischen Strömungswiderstands vorgesehen, so dass eine Trägheitsmomentachse eines mit einem Innenring des Wälzlagers drehenden Bauteils der Wälzlageranordnung wie Laufzeug im Turbolader mittels der Wellhülse auf eine Drehachse des Bauteils elastisch positioniert wird.

Die Aufgabe wird in ähnlicher Weise durch einen Turbolader mit einem Gehäusebauteil mit einer Lagerbohrung und einer Wälzlagervorrichtung zur gegenüber dem Gehäusebauteil verdrehbaren Aufnahme eines Laufzeugs gelöst, wobei ein Wälzlager mittels eines Außenrings radial elastisch in der Lagerbohrung aufgenommen ist und das Laufzeug an einem Innenring aufgenommen ist, zwischen einem Innenumfang der Lagerbohrung und einem Außenumfang des Außenrings ein Ringspalt vorgesehen ist, in dem eine Wellhülse radial elastisch verspannt ist. Ein derartiger Turbolader kann durch die radial elastische Aufnahme des Laufzeugs an dem Gehäusebauteil in einem weiten Bereich Unwuchten des Laufzeugs ausgleichen und mittels der Hysterese der elastischen Verformung auch einen vorteilhaften Dämpfungseffekt herbeiführen. Insbesondere durch das Befüllen der mittels der Wellhülse über den Umfang abwechselnd dem Außenumfang und dem Innenumfang zugewandt gebildeten Sicken mit Hydraulikfluid kann dieser dämpfende Effekt durch eine hydraulische wie hy-drodynamische Dämpfung mittels eines Strömungswiderstand gesteigert werden.

### Kurze Beschreibung der Zeichnungen

Eine bevorzugte Ausführungsform des erfindungsgemäß ausgebildeten Wälzlagers wird nachfolgend unter Bezugnahme auf die beigefügten Zeichnungen näher erläutert. Dabei zeigen:
- Figur 1: einen Schnitt durch einen Turbolader mit einer Wälzlageranordnung mit radial elastisch an einer Lagerbohrung aufgenommenen Wälzlager,
- Figur 2: eine geschnittene 3D-Ansicht des Wälzlagers der Figur 1,
- Figur 3: eine geschnittene 3D-Ansicht des Wälzlagers der Figur 1 entlang einer gegenüber der Figur 3 geänderten Schnittlinie, und
- Figur 4: eine Ansicht der Wellhülse der Figuren 1 bis 3.

### Ausführliche Beschreibung der Zeichnungen

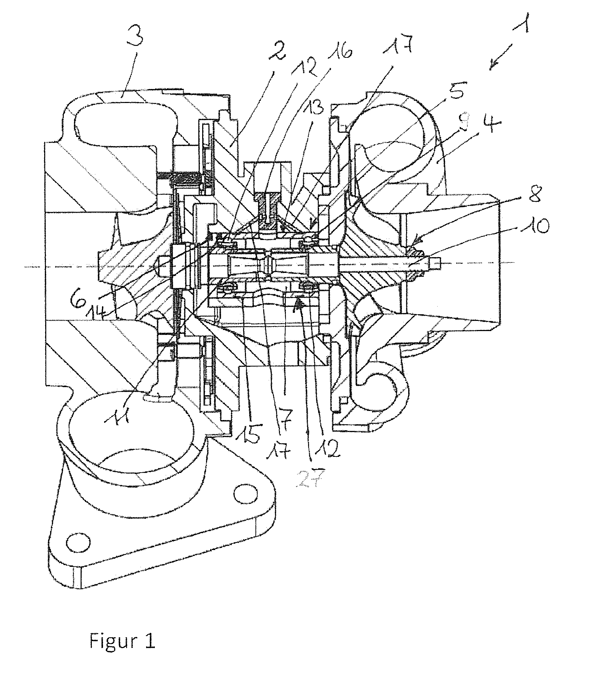

Figur 1 zeigt den Turbolader 1 mit dem Gehäusebauteil 2, das als Lagergehäuse dient, dem Verdichtergehäuse 3 und dem Turbinengehäuse 4. Das Gehäusebauteil 2 enthält die Wälzlagervorrichtung 5 mit dem radial elastisch in der Lagerbohrung 6 aufgenommenen Wälzlager 7 zur Drehlagerung des Laufzeugs 8. Hierzu nimmt der mittels der zweireihig mittels den Wälzkörpern 12 an dem Außenring 9 verdrehbare Innenring 11 des Wälzlagers 7 den Rotor 10 des Laufzeugs auf und der Außenring 9 ist radial elastisch mittels der zwischen dem Außenumfang 13 des Außenrings 9 und dem Innenumfang 14 der Lagerbohrung angeordneten Wellhülse 15 an dem Gehäusebauteil 2 aufgenommen.

Über die Drossel 16 und die Fluidbohrungen 17 wird der Wälzlagervorrichtung 5 Hydraulikfluid zugeführt, das durch in dieser Darstellung nicht einsehbare Sicken der Wellhülse 15 gedrückt wird. Infolgedessen wird zwischen dem Außenring 9 und der Lagerbohrung 6 neben der elastischen Verbindung durch das in der Wellhülse 15 mit engem Strömungsquerschnitt geführte Hydraulikfluid die hydraulische Dämpfungseinrichtung 27 gebildet, die die axiale Verlagerung des Wälzlagers 7 gegenüber dem Gehäusebauteil 2 dämpft. Hierdurch wird das Laufzeug 8 gegenüber dem Gehäusebauteil 2 zum Einen radial begrenzt elastisch drehgelagert und zum Anderen die begrenzte radiale Bewegung durch die Wirkung der hydraulischen Dämpfungseinrichtung 27 gedämpft.

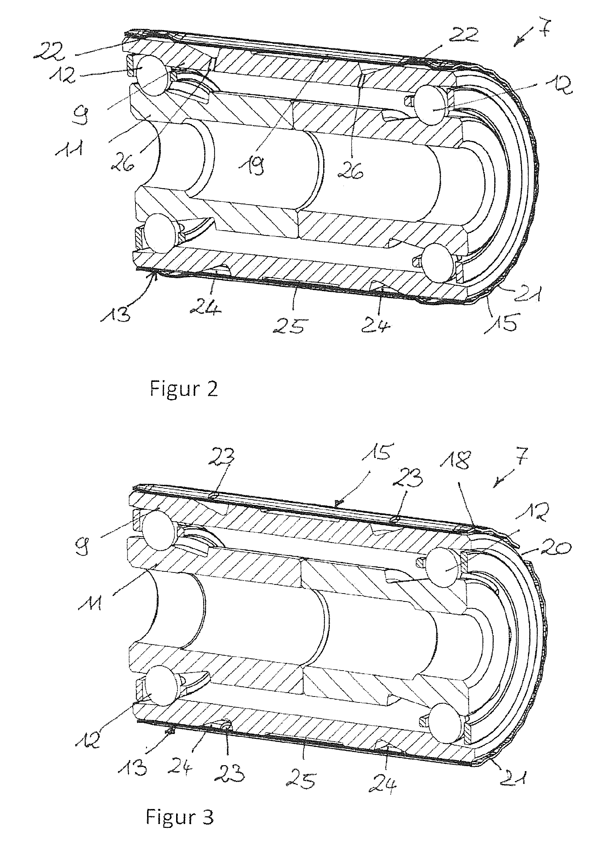

Die Figuren 2 und 3 zeigen das Wälzlager 7 der Figur 1 entlang unterschiedlicher Schnittlinien mit dem Außenring 9 und dem geteilten Innenring 11 sowie den auf zwei Wälzlagerreihen angeordneten Wälzkörpern 12. Auf den Außenumfang 13 des Außenrings 9 ist die Wellhülse 15 unter Vorspannung aufgezogen. Hierzu ist die Wellhülse 15 mit dem Längsschlitz 20 versehen. Die Wellhülse bildet über den Umfang verteilt und über diesen abwechselnd nach innen geöffnete, dem Außenumfang zugewandte Sicken 18 und nach außen geöffnete, dem Innenumfang 14 der Lagerbohrung 6 (Figur 1) zugewandte Sicken 19 auf. Die Sicken 18, 19 nehmen über die Fluidbohrungen 17 Hydraulikfluid auf und bilden in dem durch diese begrenzten Freiraum einen Strömungswiderstand, so dass bei elastischer Verlagerung der die Sicken 18, 19 bildenden Rippen 21 eine hydraulische Dämpfung. Hierzu ist die Zu- und/oder Abströmung des Hydraulikmediums aus den Sicken 18, 19 strömungsbegrenzt ausgebildet.

Zumindest einige der dem Innenumfang 14 und damit den Fluidbohrungen 17 (Figur 1) zugewandten Sicken 19 erhalten einen mit dem Innenumfang 14 in Anlagekontakt tretenden, in die Wellhülse 15 eingeformten Höcker 22, der die durch den Innenumfang 14 begrenzten Innenräume der Sicken 19 jeweils stirnseitig mit einem Strömungswiderstand versieht, so dass Hydraulikfluid durchflussbegrenzt an den Stirnseiten der Wellhülse 15 austreten kann.

Die dem Außenumfang 13 zugewandten Sicken 18 werden mittels der mit den Fluidbohrungen 17 in Verbindung stehenden Drosselöffnungen 23 mit Hydraulikfluid versorgt. Zur Volumenerhöhung der Sicken 18 sind in dem Außenumfang 13 des Außenrings 9 umlaufende Ringnuten 24, 25 vorgesehen, wobei die Ringnuten 24 auf axial gleicher Höhe wie die Drosselöffnungen vorgesehen sind. Zur Kühlung der Wälzkörper 12 und der Laufflächen für diese ist an den Ringnuten 24 und in Umfangsrichtung zu den Drosselöffnungen 23 versetzt jeweils ein Durchstich 26 durch den Außenring 9 vorgesehen, die bevorzugt einen höheren Strömungswiderstand als die Drosselöffnungen 23 aufweisen, so dass die Sicken 18 unter Einstellung eines Differenzdrucks befüllt bleiben.

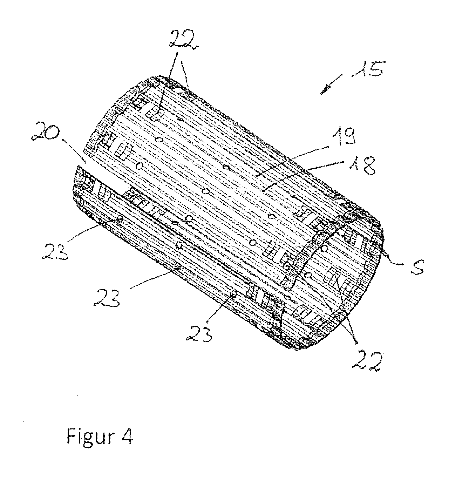

Figur 4 zeigt die Wellhülse 15 in Ansicht. Die Materialstärke s und die Anzahl und die sich damit ergebende Weite der über den Umfang verteilten, sich abwechselnden Sicken 18, 19 dienen dabei der Einstellung der radialen Steifigkeit der Wellhülse 15. Der Längsschlitz 20 ermöglicht ein vorgespanntes Aufziehen auf den Außenring 9 (Figur 2). Die Einstellung der Dämpfungswirkung der Wellhülse 15 erfolgt durch Einstellung des Strömungswiderstands in den Sicken 18, 19. Hierbei werden in Abstimmung mit deren gewünschter radialer Steifigkeit beziehungsweise Elastizität die Anzahl der Sicken 18, 19, die Anzahl und Öffnungsquerschnitte der den Durchfluss durch diese bestimmenden Drosselöffnungen 23 und die Anzahl und der die Öffnungsquerschnitte zu dem Innenumfang 14 der Lagerbohrung 6 (Figur 1) einstellenden Höcker 22 vorgegeben.

### Bezugszeichenliste

- 1: Turbolader
- 2: Gehäusebauteil
- 3: Verdichtergehäuse
- 4: Turbinengehäuse
- 5: Wälzlagervorrichtung
- 6: Lagerbohrung
- 7: Wälzlager
- 8: Laufzeug
- 9: Außenring
- 10: Rotor
- 11: Innenring
- 12: Wälzkörper
- 13: Außenumfang
- 14: Innenumfang
- 15: Wellhülse
- 16: Drossel
- 17: Fluidbohrung
- 18: Sicke
- 19: Sicke
- 20: Längsschlitz
- 21: Rippe
- 22: Höcker
- 23: Drosselöffnung
- 24: Ringnut
- 25: Ringnut
- 26: Durchstich
- 27: Dämpfungseinrichtung
- s: Materialstärke

## Patentansprüche

1. Wälzlagervorrichtung (5) insbesondere in einem Turbolader (1) mit einem Gehäusebauteil (2) mit einer Lagerbohrung (6) mit einem Innenumfang (14) und einem in dieser an einem Außenring (9) mit einem Außenumfang (13) aufgenommenen Wälzlager (7), **dadurch gekennzeichnet, dass** an einem Ringspalt zwischen dem Außenumfang (13) des Außenrings (9) und dem Innenumfang (14) der Lagerbohrung (6) eine hydraulische Dämpfungseinrichtung (27) aus über den Umfang abwechselnd dem Außenumfang (13) und dem Innenumfang (14) zugewandten, zumindest teilweise mit einem Hydraulikfluid befüllten Sicken (18, 19) gebildet ist.

2. Wälzlagervorrichtung (5) nach Anspruch 1, **dadurch gekennzeichnet, dass** die Sicken (18, 19) mittels einer in dem Ringspalt elastisch verspannten Wellhülse (15) gebildet sind.

3. Wälzlagervorrichtung (5) nach Anspruch 1 oder 2, **dadurch gekennzeichnet, dass** an dem Innenumfang (14) der Lagerbohrung (6) zumindest eine Fluidbohrung (17) für das Hydraulikfluid vorgesehen ist.

4. Wälzlagervorrichtung (5) nach Anspruch 3, **dadurch gekennzeichnet, dass** zumindest eine dem Außenumfang (13) zugewandte Sicke (18) zumindest eine Drosselöffnung (23) gegenüber dem Innenumfang (14) der Lagerbohrung (6) aufweist.

5. Wälzlagervorrichtung (5) nach einem der Ansprüche 1 bis 4, **dadurch gekennzeichnet, dass** der Außenring (9) zumindest einen Durchstich (26) für das Hydraulikfluid aufweist.

6. Wälzlagervorrichtung (5) nach einem der Ansprüche 2 bis 5, **dadurch gekennzeichnet, dass** zumindest eine Sicke (19) an zumindest einer axialen Stirnseite mittels eines in die Wellhülse (15) eingeformten Höckers (22) zumindest teilweise verschlossen ist.

7. Wälzlagervorrichtung (5) nach einem der Ansprüche 1 bis 6, **dadurch gekennzeichnet, dass** die Sicken (18, 19) radial elastisch ausgebildet sind.

8. Wälzlagervorrichtung (5) nach einem der Ansprüche 1 bis 7, **dadurch gekennzeichnet, dass** eine Trägheitsmomentachse eines mit einem Innenring (11) des Wälzlagers (7) drehenden Bauteils mittels der Wellhülse (15) auf eine Drehachse des Bauteils elastisch positioniert wird.

9. Turbolader (1) mit einem Gehäusebauteil (2) mit einer Lagerbohrung (6) und einer Wälzlagervorrichtung (5) zur gegenüber dem Gehäusebauteil (2) verdrehbaren Aufnahme eines Laufzeugs (8), wobei ein Wälzlager (7) mittels eines Außenrings (9) radial elastisch in der Lagerbohrung (6) aufgenommen ist und das Laufzeug (8) an einem Innenring (11) aufgenommen ist, **dadurch gekennzeichnet, dass** zwischen einem Innenumfang (14) der Lagerbohrung (6) und einem Außenumfang (13) des Außenrings (9) ein Ringspalt vorgesehen ist, in dem eine Wellhülse (15) radial elastisch verspannt ist.

10. Turbolader (1) nach Anspruch 9, **dadurch gekennzeichnet, dass** mittels der Wellhülse (15) über den Umfang abwechselnd dem Außenumfang (13) und dem Innenumfang (14) zugewandte, zumindest teilweise mit einem Hydraulikfluid befüllte Sicken (18, 19) gebildet sind.

## Claims

1. Anti-friction bearing apparatus (5), in particular in a turbocharger (1), with a housing component (2) with a bearing bore (6) with an internal circumference (14) and an anti-friction bearing (7) which is received on an outer ring (9) with an outer circumference (13), **characterized in that** a hydraulic damping device (27) comprising beads (18, 19) which face the outer circumference (13) and the inner circumference (14) in an alternating manner over the circumference and are filled at least partially with a hydraulic fluid is formed on an annular gap between the outer circumference (13) of the outer ring (9) and the inner circumference (14) of the bearing bore (6).

2. Anti-friction bearing apparatus (5) according to Claim 1, **characterized in that** the beads (18, 19) are formed by means of a corrugated bush (15) which is braced elastically in the annular gap.

3. Anti-friction bearing apparatus (5) according to Claim 1 or 2, **characterised in that** at least one fluid bore (17) for the hydraulic fluid is provided on the inner circumference (14) of the bearing bore (6).

4. Anti-friction bearing apparatus (5) according to Claim 3, **characterised in that** at least one bead (18) which faces the outer circumference (13) has at least one throttle opening (23) apposite the inner circumference (14) of the bearing bore (6).

5. Anti-friction bearing apparatus (5) according to one of Claims 1 to 4, **characterized in that** the outer ring (9) has at least one perforation (26) for the hydraulic fluid.

6. Anti-friction bearing apparatus (5) according to one of Claims 2 to 5, **characterized in that** at least one bead (19) is closed at least partially on at least one axial end side by means of a protuberance (22) which is formed into the corrugated bush (15).

7. Anti-friction bearing apparatus (5) according to one of Claims 1 to 6, **characterized in that** the beads (18, 19) are of radially elastic configuration.

8. Anti-friction bearing apparatus (5) according to one of Claims 1 to 7, **characterized in that** an axis of moment of inertia of a component which rotates with an inner ring (11) of the anti-friction bearing (7) is positioned elastically onto a rotational axis of the component by means of the corrugated bush (15).

9. Turbocharger (1) with a housing component (2) with a bearing bore (6) and an anti-friction bearing apparatus (5) for receiving a rotor (8) in a rotatable manner with respect to the housing component (2), an anti-friction bearing (7) being received radially elastically in the bearing bore (6) by means of an outer ring (9), and the rotor (8) being received on an inner ring (11), **characterized in that** an annular gap is provided between an inner circumference (14) of the bearing bore (6) and an outer circumference (13) of the outer ring (9), in which annular gap a corrugated bush (15) is braced radially elastically.

10. Turbocharger (1) according to Claim 9, **characterized in that** beads (18, 19) which face the outer circumference (13) and the inner circumference (14) in an alternating manner over the circumference and are filled at least partially with a hydraulic fluid are formed by means of the corrugated bush (15).

## Revendications

1. Dispositif de palier à roulement (5), en particulier dans un turbocompresseur (1), comprenant un composant de boîtier (2) avec un alésage de palier (6) ayant une périphérie interne (14) et un palier à roulement (7) reçu dans ledit alésage, au niveau d'une bague externe (9) ayant une périphérie externe (13), **caractérisé en ce qu'**un dispositif d'amortissement hydraulique (27) est formé au niveau d'une fente annulaire entre la périphérie externe (13) de la bague externe (9) et la périphérie interne (14) de l'alésage de palier (6), à partir de moulures (18, 19) au moins partiellement remplies d'un fluide hydraulique, tournées, de manière alternée sur la périphérie, vers la périphérie externe (13) et vers la périphérie interne (14).

2. Dispositif de palier à roulement (5) selon la revendication 1, **caractérisé en ce que** les moulures (18, 19) sont formées au moyen d'une douille ondulée (15) serrée élastiquement dans la fente annulaire.

3. Dispositif de palier à roulement (5) selon la revendication 1 ou 2, **caractérisé en ce qu'**au moins un alésage de fluide (17) pour le fluide hydraulique est prévu au niveau de la périphérie interne (14) de l'alésage de palier (6).

4. Dispositif de palier à roulement (5) selon la revendication 3, **caractérisé en ce qu'**au moins une moulure (18) tournée vers la périphérie externe (13) présente au moins une ouverture d'étranglement (23) par rapport à la périphérie interne (14) de l'alésage de palier (6).

5. Dispositif de palier à roulement (5) selon l'une quelconque des revendications 1 à 4, **caractérisé en ce que** la bague externe (9) présente au moins un perçage (26) pour le fluide hydraulique.

6. Dispositif de palier à roulement (5) selon l'une quelconque des revendications 2 à 5, **caractérisé en ce qu'**au moins une moulure (19) est fermée au moins en partie au niveau d'au moins un côté frontal axial au moyen d'une protubérance (22) formée à l'intérieur de la douille ondulée (15).

7. Dispositif de palier à roulement (5) selon l'une quelconque des revendications 1 à 6, **caractérisé en ce que** les moulures (18, 19) sont réalisées de manière radialement. élastique.

8. Dispositif de palier à roulement (5) selon l'une quelconque des revendications 1 à 7, **caractérisé en ce qu'**un axe de moment d'inertie d'un composant tournant avec une bague interne (11) du palier à roulement (7) est positionné élastiquement au moyen de la douille ondulée (15) sur un axe de rotation du composant.

9. Turbocompresseur (1) comprenant un composant de boîtier (2) avec un alésage de palier (6) et un dispositif de palier à roulement (5) pour recevoir de manière rotative par rapport au composant de boîtier (2) un équipement mobile (8), un palier à roulement (7) étant reçu au moyen d'une bague externe (9) de manière radialement élastique dans l'alésage de palier (6) et l'équipement mobile (8) étant reçu sur une bague interne (11), **caractérisé en ce qu'**entre une périphérie interne (14) de l'alésage de palier (6) et une périphérie externe (13) de la bague externe (9) est prévue une fente annulaire dans laquelle est serrée de manière radialement élastique une douille ondulée (15).

10. Turbocompresseur (1) selon la revendication 9, **caractérisé en ce qu'**au moyen de la douille ondulée (15) sont formées des moulures (18, 19) au moins partiellement remplies d'un fluide hydraulique, tournées, de manière alternée sur la périphérie, vers la périphérie externe (13) et vers la périphérie interne (14).
